# EUROPEAN PATENT APPLICATION

(11) **EP 4 459 948 A1**
(43) Date of publication of application: **06.11.2024**
(21) Application number: 24172203.2
(22) Date of filing: 24.04.2024
(51) Int. Cl.: H04L 47/10, H04L 47/11, H04L 47/12, H04L 47/127, H04L 47/263, H04L 47/31

(54) **UPLINK DATA CONGESTION DETECTION FOR LOW-LATENCY SERVICES IN WIRELESS COMMUNICATION NETWORKS**

(30) Priority: 01.05.2023 US 202318310224
(71) Applicant: T-Mobile Innovations LLC, Overland Park, KS 66251 (US)
(72) Inventor: FANG, Zheng, McLean 22102 (US); CAI, Zheng, Fairfax 22030 (US)
(74) Representative: Suddaby, Mark Edward

(57) **Abstract**

Various embodiments comprise a wireless communication network to proactively notify user devices in response to uplink data congestion. The wireless communication network comprises an access node and a wireless user device. The access node wirelessly exchanges user data with a wireless user device and exchanges the user data with a network user plane. The access node detects a data queue for uplink user data transferred by the wireless user device and indicates the data queue to the wireless user device. The wireless user device receives the indication and schedules additional uplink data transmissions based on a data priority. The access node wirelessly exchanges additional user data with the wireless user device and exchanges the additional user data with the network user plane.

## Description

### TECHNICAL FIELD

Various embodiments of the present technology relate to congestion detection, and more specifically, to notifying User Equipment (UE) when uplink congestion occurs for Low Latency, Low Loss, Scalable Throughput (L4S) data services.

### BACKGROUND

Wireless communication networks provide wireless data services to wireless user devices. Exemplary wireless data services include machine-control, internet-access, media-streaming, online gaming, and social-networking. Exemplary wireless user devices comprise phones, computers, vehicles, robots, and sensors. Radio Access Networks (RANs) exchange wireless signals with the wireless user devices over radio frequency bands. The wireless signals use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). The RANs exchange network signaling and user data with network elements that are often clustered together into wireless network cores over backhaul data links. The core networks execute network functions to provide wireless data services to the wireless user devices.

Low Latency, Low Loss, Scalable Throughput (L4S) is a network architecture that enables applications to receive low latency and high data rate communications with dynamic rate adaption for a stable Quality-of-Experience (QoE). Maintaining stable QoE is important for preserving the user experience in latency sensitive L4S applications like live video broadcast, Extended Reality (XR), Mixed Reality (MR), Augmented Reality (AR), and Virtual Reality (VR) applications. L4S systems utilize dynamic rate adaption algorithms at the application layer to ensure the latency requirements for the L4S applications are met. The dynamic rate adaption algorithms are hosted by L4S capable application servers and take network data congestion, particularly RAN data congestion, as an input to generate a congestion control output. The congestion control output modifies the network traffic pattern to preserve latency. The deployment of L4S architecture in wireless communication networks is not uniform. An L4S capable user device that begins an L4S data session with an application server that lacks L4S functionality cannot receive server-side L4S congestion control support. When the L4S capable user device does not receive server-side L4S congestion support, the QoE of the L4S session decreases. Due to the large number of application servers in wireless communication networks, implementing L4S functionality in every application server is expensive and time consuming.

Unfortunately, wireless communication networks do not effectively notify user devices when uplink data congestion controls. Moreover, the wireless communication networks do not efficiently respond to uplink congestion for latency sensitive data services like L4S.

### OVERVIEW

This Overview is provided to introduce a selection of concepts in a simplified form that are further described below in the Technical Description. This summary is not intended to identify key features or essential features of the claimed subject matter, nor is it intended to be used as an aid in determining the scope of the claimed subject matter.

Various embodiments of the present technology relate to solutions to detect data congestion in Radio Access Networks (RANs). Some embodiments comprise a method of operating a wireless communication network to proactively notify user devices in response to uplink data congestion. The method comprises an access node wirelessly exchanging user data with a wireless user device. The method further comprises the access node exchanging the user data with a network user plane. The method further comprises the access node detecting a data queue for uplink user data transferred by the wireless user device. The method further comprises the access node indicating the data queue to the wireless user device. The method further comprises the wireless user device receiving the indication and scheduling additional uplink data transmissions based on a data priority. The method further comprises the access node wirelessly exchanging additional user data with the wireless user device. The method further comprises the access node exchanging the additional user data with the network user plane.

Some embodiments comprise a wireless communication network configured to proactively notify user devices in response to uplink data congestion. The wireless communication network comprises an access node and a wireless user device. The access node wirelessly exchanges user data with the wireless user device and exchanges the user data with a network user plane. The access node detects a data queue for uplink user data transferred by the wireless user device and indicates the data queue to the wireless user device. The wireless user device receives the indication and schedules additional uplink data transmissions based on a data priority. The access node wirelessly exchanges additional user data with the wireless user device and exchanges the additional user data with the network user plane.

Some embodiments comprise a method of operating a Radio Access Network (RAN) to proactively notify user devices in response to uplink data congestion. The method comprises radio circuitry wirelessly exchanging user data with a wireless user device. The method further comprises RAN circuitry exchanging the user data with a network user plane. The method further comprises the RAN circuitry detecting a data queue for uplink user data transferred by the wireless user device. The method further comprises the RAN circuitry indicating the data queue to the wireless user device over the radio circuitry where the wireless user device receives the indication and schedules additional uplink data transmissions based on a data priority. The method further comprises the radio circuitry wirelessly exchanging additional user data with the wireless user device. The method further comprises the RAN circuitry exchanging the additional user data with the network user plane.

### DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a wireless communication network to proactively notify a user device in response to uplink data congestion.
Figure 2 illustrates an exemplary operation of the wireless communication network to proactively notify the user device in response to uplink data congestion.
Figure 3 illustrates a wireless communication network to proactively notify a User Equipment (UE) in response to uplink data congestion.
Figure 4 illustrates an exemplary operation of the wireless communication network to proactively notify the UE in response to uplink data congestion.
Figure 5 illustrates an exemplary operation of the wireless communication network to proactively notify the UE in response to uplink data congestion.
Figure 6 illustrates a Fifth Generation (5G) wireless communication network to proactively notify a 5G UE in response to uplink data congestion.
Figure 7 illustrates the 5G UE in the 5G communication network.
Figure 8 illustrates a 5G Radio Access Network (RAN) in the 5G wireless communication network.
Figure 9 illustrates a Network Function Virtualization Infrastructure (NFVI) in the 5G wireless communication network.
Figure 10 illustrates an exemplary operation of the 5G wireless communication network to proactively the UE in response to uplink data congestion.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### TECHNICAL DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

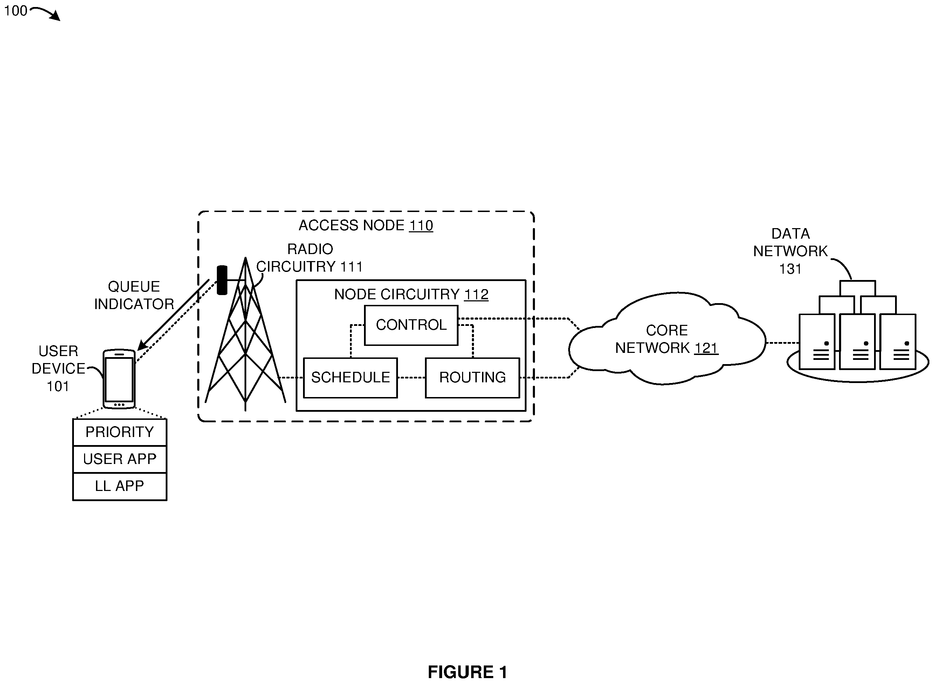

Figure 1 illustrates wireless communication network 100 network to proactively notify user devices in response to uplink data congestion. Wireless communication network 100 delivers services like machine communications, internet-access, media-streaming, or some other wireless communications product to user devices. Wireless communication network 100 comprises user device 101, access node 110, core network 121, and data network 131. User device 101 comprises network applications for priority scheduling (PRIORITY), user applications (USER APP), and low-latency applications (LL APP). Access node 110 comprise radio circuitry 111 and node circuitry 112. Node circuitry 112 comprises network applications for node control (CONTROL), data scheduling (SCHEDULE), and data routing (ROUTING). In other examples, wireless network communication network 100 may comprise additional or different elements than those illustrated in Figure 1.

Various examples of network operation and configuration are described herein. In some examples, access node 110 wirelessly exchanges user data with user device 101. Access node 110 exchanges the user data with core network 121. Core network 121 exchanges the user data with data network 131. For example, node circuitry 112 may exchange user data for a low latency data service with core network 121. Access node 110 measures a queue status for uplink data traffic transferred by user device 101. For example, the scheduling application in node circuitry 112 may detect there exists more downlink data to transmit than available air resources. Access node 110 indicates the uplink queue to user device 101. User device 101 wirelessly receives the indication from access node 110 and schedules additional uplink data transmissions based on a data priority. For example, the priority scheduling application in user device 101 may prioritize scheduling user data associated with the low latency application over user data associated with the other user applications. By prioritizing transmitting uplink data for the low latency application over other uplink data, user device 101 can maintain the latency requirements of the low latency application. Access node 110 wirelessly exchanges additional user data with user device 101. Access node 110 exchanges the additional user date with core network 121. Core network 121 exchanges the user data with data network 131.

Wireless communication network 100 provides wireless data services to user device 101. Exemplary user devices include phones, computers, vehicles, robots, and sensors. Access node 110 exchanges wireless signals with user device 101 over radio frequency bands. The wireless signals use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). Access node 110 is connected to core network 121 over backhaul data links. Access node 110 exchanges network signaling and user data with network elements in core network 121. Access node 110 may comprise wireless access points, Radio Access Networks (RANs), edge computing systems, or other types of wireless/wireline access systems to provide wireless/wireline links to user device 101, the backhaul data links, and edge computing services between user device 101 and core network 121.

Access node 110 may comprise Radio Units (RUs), Distributed Units (DUs) and Centralized Units (CUs). For example, radio circuitry 111 may comprise an RU and node circuitry 112 may comprise a DU and a CU. The RUs may be mounted at elevation and have antennas, modulators, signal processors, and the like. The RUs are connected to the DUs which are usually nearby network computers. The DUs handle lower wireless network layers like the Physical Layer (PHY), Media Access Control (MAC), and Radio Link Control (RLC). The DUs are connected to the CUs which are larger computer centers that are closer to core network 121. The CUs handle higher wireless network layers like the Radio Resource Control (RRC), Service Data Adaption Protocol (SDAP), and Packet Data Convergence Protocol (PDCP). The CUs are coupled to network functions in core network 121.

Core network 121 and data network 131 are representative of computing systems that provide wireless data services to user device 101 over access node 110. Exemplary computing systems comprise data centers, edge computing networks, cloud computing networks, and the like. The computing systems of core network 121 store and execute the network functions to provide wireless data services to user device 101 over access node 110. Exemplary network functions include Access and Mobility Management Function (AMF), Session Management Function (SMF), and User Plane Function (UPF). Core network 121 may comprise a Fifth Generation Core (5GC) architecture and/or an Evolved Packet Core (EPC) architecture. The computing systems of data network 131 store and execute applications to provide low latency data services for user device 101.

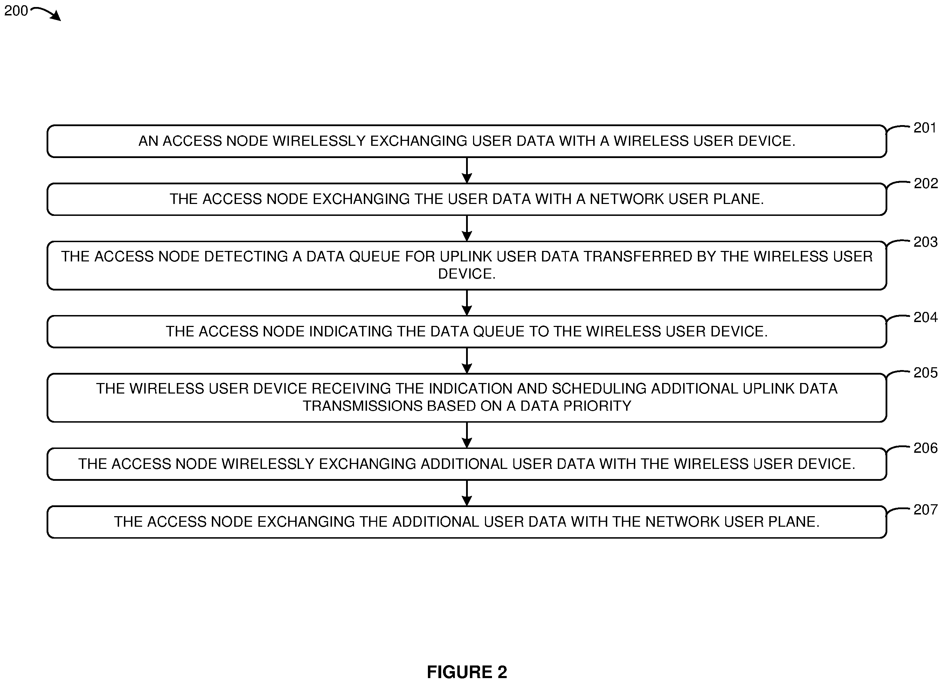

Figure 2 illustrates process 200. Process 200 comprises an exemplary operation of wireless communication network 100 to proactively notify user devices in response to uplink data congestion. The operation may vary in other examples. The operations of process 200 comprise an access node wirelessly exchanging user data with a wireless user device (step 201). The operations further comprise the access node exchanging the user data with a network user plane (step 202). The operations further comprise the access node detecting a data queue for uplink user data transferred by the wireless user device (step 203). The operations further comprise the access node indicating the data queue to the wireless user device (step 204). The operations further comprise the wireless user device receiving the indication and scheduling additional uplink data transmissions based on a data priority (step 205). The operations further comprise the access node wirelessly exchanging additional user data with the wireless user device (step 206). The operations further comprise the access node exchanging the additional user data with the network user plane (step 207).

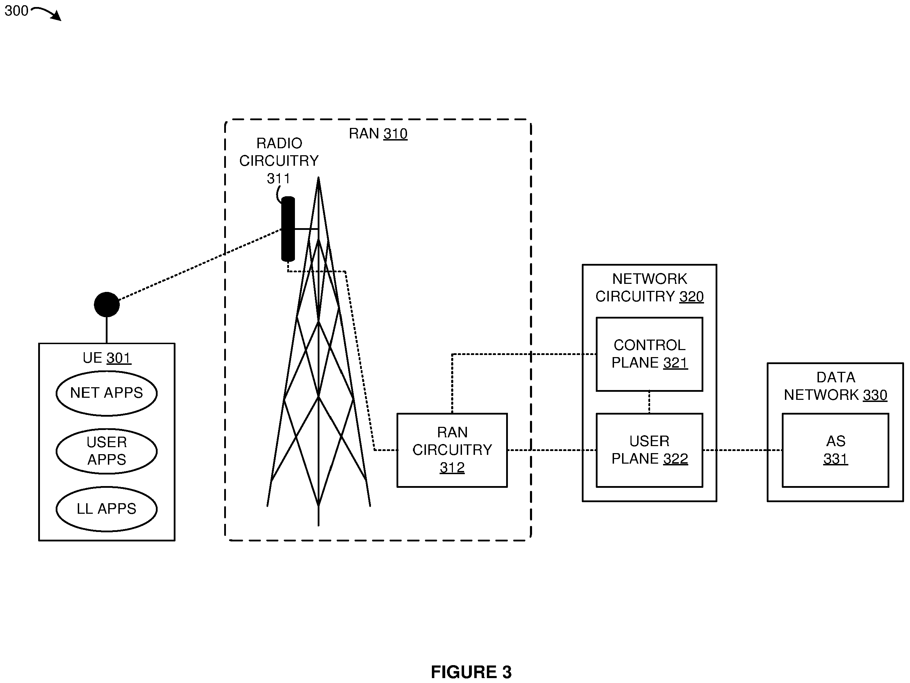

Figure 3 illustrates wireless communication network 300 network to proactively notify a User Equipment (UE) in response to uplink data congestion. Wireless communication network 300 is an example of wireless network 100, however network 100 may differ. Wireless communication network 300 comprises UE 301, RAN 310, network circuitry 320, and data network 330. UE 301 comprises network applications (NET APPS), user applications (USER APPS), and low-latency applications (LL APPS). RAN 310 comprises radio circuitry 311 and RAN circuitry 312. Network circuitry 320 comprises control plane 321 and user plane 322. Data network 330 comprises Application Server (AS) 331. In other examples, wireless network 300 may comprise additional or different elements than those illustrated in Figure 3.

In some examples, radio circuitry 311 wirelessly exchanges user data with UE 301 and RAN circuitry 112 exchanges the user data with user plane 322 for delivery to application server 331. For example, RAN 310 may wirelessly transfer downlink user data for the user applications and low-latency applications generated by AS 331 and may wirelessly receive uplink user data for the user applications and low-latency applications generated by UE 301. RAN circuitry 312 monitors uplink data congestion for UE 301. For example, RAN circuitry 312 may determine when the amount of available air resources to transfer uplink data over a given time period is less than the amount of uplink data to transfer for the time period. When RAN circuitry 312 detects an uplink data queue, RAN circuitry 312 generates and transfers a queue indication for UE 301. For example, RAN circuitry 312 may generate a queue report that indicates the uplink queue, the current uplink latency, the current uplink data rate, and the queue size. Radio circuitry 311 wirelessly transfers the queue indication to UE 301.

UE 301 receives the queue indication. UE 301 responsively determines uplink data priority for the user applications and low-latency applications. UE 301 prioritizes scheduling uplink data for low-latency applications over other user applications. Exemplary low-latency applications comprise L4S applications for live video upload, Extended Reality (XR), Mixed Reality (MR), Augmented Reality (AR), or Virtual Reality (VR). UE 301 schedules additional uplink data transmissions based on the priority. Radio circuitry 311 exchanges additional user data with UE 301. Node circuitry 312 exchanges the additional user data with user plane 322 for delivery to AS 331.

Advantageously, wireless communication network 300 efficiently notifies UE 301 when uplink data queues occur. Moreover, wireless communication network 300 effectively prioritizes uplink data transfer from UE 301 when uplink queues occur to maintain the latency requirements of latency sensitive data streams.

UE 301 and RAN 310 communicate over links using wireless/wired technologies like 5GNR, LTE, LP-WAN, WIFI, Bluetooth, and/or some other type of wireless or wireline networking protocol. The wireless technologies use electromagnetic frequencies in the low-band, mid-band, high-band, or some other portion of the electromagnetic spectrum. The wired connections comprise metallic links, glass fibers, and/or some other type of wired interface. RAN 310, network circuitry 320, and data network 330 communicate over various links that use metallic links, glass fibers, radio channels, or some other communication media. The links use Fifth Generation Core (5GC), IEEE 802.3 (ENET), Time Division Multiplex (TDM), Data Over Cable System Interface Specification (DOCSIS), Internet Protocol (IP), General Packet Radio Service Transfer Protocol (GTP), 5GNR, LTE, WIFI, virtual switching, inter-processor communication, bus interfaces, and/or some other data communication protocols.

UE 301 may comprise a phone, vehicle, computer, sensor, drone, robot, or another type of data appliance with wireless and/or wireline communication circuitry. Although RAN 310 is illustrated as a tower, RAN 310 may comprise another type of mounting structure (e.g., a building), or no mounting structure at all. RAN 310 comprises a Fifth Generation (5G) RAN, LTE RAN, gNodeB, eNodeB, NB-IoT access node, LP-WAN base station, wireless relay, WIFI hotspot, Bluetooth access node, and/or another wireless or wireline network transceiver. UE 301 and RAN 310 comprise antennas, amplifiers, filters, modulation, analog/digital interfaces, microprocessors, software, memories, transceivers, bus circuitry, and the like. Control plane 321 comprises network functions like AMF, SMF, and the like. User plane 322 comprises network functions like UPF and the like. Data network 330 is representative of a data endpoint that for UE.

UE 301, RAN 310, network circuitry 320, and data network 330 comprise microprocessors, software, memories, transceivers, bus circuitry, and the like. The microprocessors comprise Digital Signal Processors (DSP), Central Processing Units (CPU), Graphical Processing Units (GPU), Application-Specific Integrated Circuits (ASIC), Field Programmable Gate Array (FPGA), and/or the like. The memories comprise Random Access Memory (RAM), flash circuitry, Solid State Drives (SSD), Non-Volatile Memory Express (NVMe) SSDs, Hard Disk Drives (HDDs), and/or the like. The memories store software like operating systems, user applications, radio applications, network functions, and multimedia functions. The microprocessors retrieve the software from the memories and execute the software to drive the operation of wireless communication network 300 as described herein.

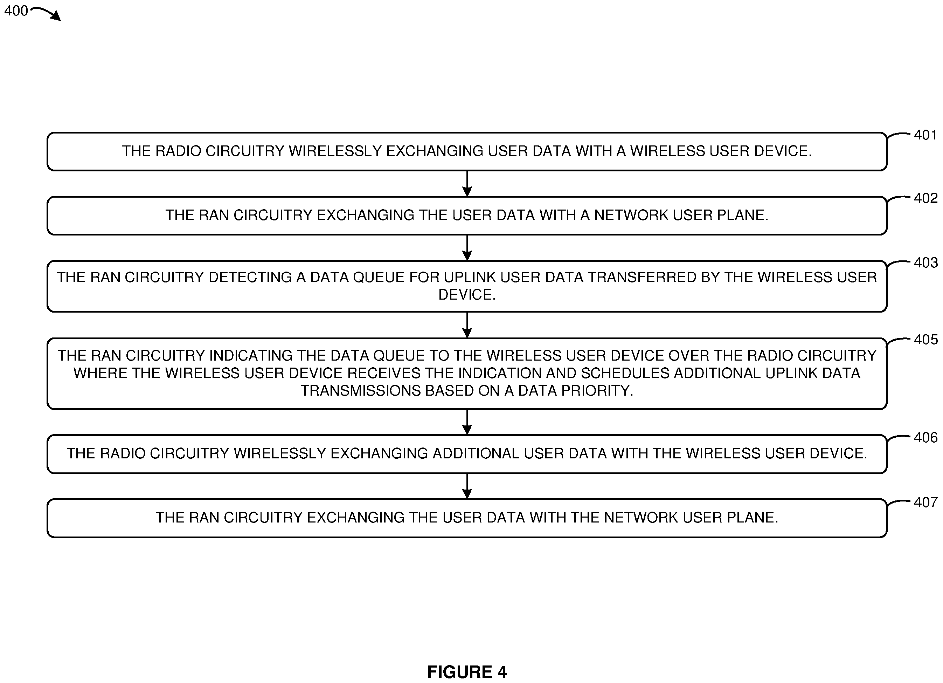

Figure 4 illustrates process 400. Process 400 comprises an exemplary operation of wireless communication network 300 to proactively notify a UE in response to uplink data congestion. The operations of process 400 comprise radio circuitry wirelessly exchanging user data with a wireless user device (step 401). The operations further comprise RAN circuitry exchanging the user data with a network user plane (step 402). The operations further comprise the RAN circuitry detecting a data queue for uplink user data transferred by the wireless user device (step 403). The operations further comprise the node circuitry indicating the data queue to the wireless user device over the radio circuitry where the wireless user device receives the indication and schedules additional uplink data transmissions based on a data priority (step 404). The operations further comprise the radio circuitry wirelessly exchanges additional user data with the wireless user device (step 405). The operations further comprise the RAN circuitry exchanging the user data with the network user plane (step 406).

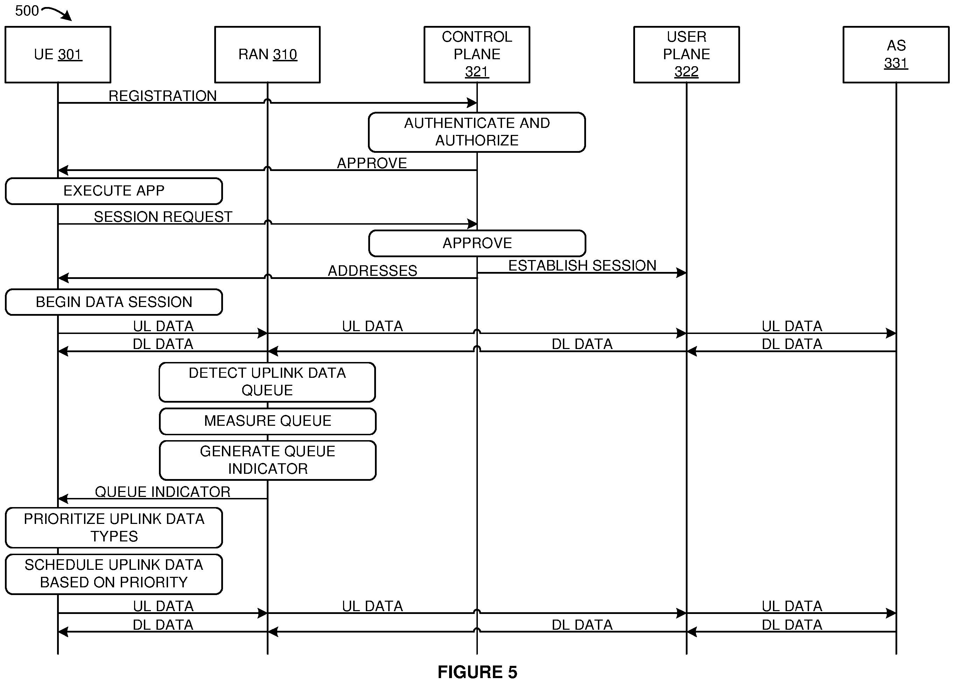

Figure 5 illustrates process 500. Process 500 comprises an exemplary operation of wireless communication network 300 to inhibit downlink congestion for L4S data services. The operation may vary in other examples. In operation, UE 301 transfers a registration request for data services to control plane 321 over RAN 310. For example, the network application on UE 301 may drive the radio circuitry of UE 301 to wirelessly transfer the registration request. Control plane 321 authenticates and authorizes UE 301 for wireless data service. Control plane 321 transfers a registration approval to UE 301. UE 301 executes user applications and low latency applications. In response, UE 301 transfers a session request for low latency data services to control plane 321. Control plane 321 approves the requested data sessions. Control plane 321 controls user plane 322 to establish the request data session. Control plane 321 transfers network addresses for user plane 322 and AS 331 to UE 301. UE 301 begins the data sessions and wirelessly transfers uplink user data to RAN 310. RAN 310 transfers the uplink (UL) user data to user plane 322. User plane 322 transfers the uplink user data to AS 331. AS 331 generates and transfers downlink (DL) user data to user plane 322. User plane 322 transfers the downlink user data to RAN 310. RAN 310 wirelessly transfers the downlink user data to UE 301.

RAN 310 monitors uplink data latency for UE 301 to detect uplink data congestion through RAN 310. When RAN 310 detects an uplink data queue, RAN 310 indicates the existence of the data queue to UE 301. For example, RAN 310 may measure queue metrics like latency, data rate, queue size, and estimated queue time to detect the uplink queue. For example, a congestion detection application resident in RAN circuitry 312 may determine an Explicit Congestion Notification (ECN) counter exceeds a threshold value to detect when the uplink data queue forms. In addition to indicating the existence of the data queue, RAN 310 may generate and transfer queue report that characterizes the amount of queued uplink data, the current uplink data rate, a delta between the current uplink data rate and an expected uplink data rate, a queue time, a latency, and/or other metrics characterizing the data congestion in RAN 310.

UE 301 receives the queue indication. The network applications resident in UE 301 process the queue report to generate a priority schedule for uplink data transmission. UE 301 prioritizes scheduling uplink data for low latency applications over uplink data for other types of user applications. For example, a network application in UE 301 may transmit data packets for an L4S XR application before transmitting data packets for other user applications to maintain the latency requirements for the L4S XR application. UE 301 wirelessly transfers additional uplink user data to RAN 310 based on the priority schedule. RAN 310 transfers the uplink user data to user plane 322. User plane 322 transfers the uplink user data to AS 331. AS 331 generates and transfers additional downlink user data to user plane 322. User plane 322 transfers the additional downlink user data to RAN 310. RAN 310 wirelessly transfers the additional downlink user data to UE 301.

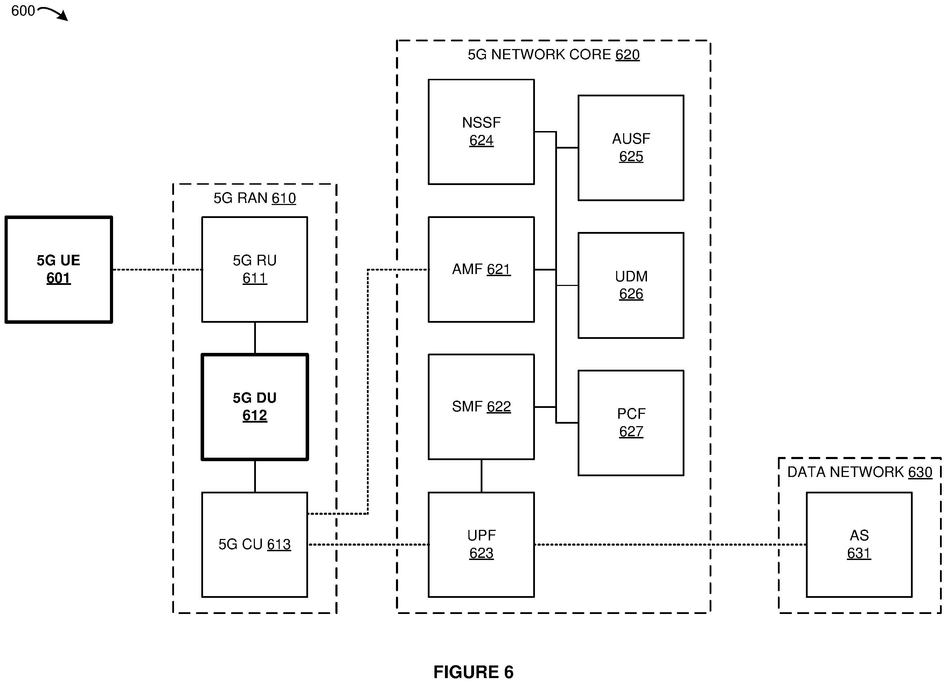

Figure 6 illustrates 5G communication network 600 to proactively notify a 5G UE in response to uplink data congestion. 5G communication network 600 comprises an example of wireless communication networks 100 and 300, although networks 100 and 300 may differ. 5G communication network 600 comprises 5G UE 601, 5G RAN 610, 5G network core 620, and data network 630. 5G RAN 610 comprises 5G Radio Unit (RU) 611, 5G Distributed Unit (DU) 612, and 5G Centralized Unit (CU) 613. 5G network core 620 comprises AMF 621, SMF 622, UPF 623, Network Slice Selection Function (NSSF) 624, Authenticating Server Function (AUSF) 625, Unified Data Management (UDM) 626, and Policy Control Function (PCF) 627. Data network 630 comprises Application Server (AS) 631. Other network functions and network elements are typically present in 5G network core 620 but are omitted for clarity. In other examples, wireless network communication network 600 may comprise additional or different elements than those illustrated in Figure 6.

UE 601 wirelessly attaches to CU 613 via DU 612 and RU 611. UE 601 exchanges attachment signaling with CU 613 to establish a connection with 5G network applications hosted by CU 613. The attachment signaling indicates information like a registration type, UE capabilities, requested slice types, and Protocol Data Unit (PDU) session requests. CU 613 transfers a registration request for UE 601 to AMF 621. AMF 621 responds to the registration request by transferring an identity request to UE 601 via RAN 610. UE 601 responsively indicates its identity to AMF 621 via RAN 610. AMF 621 interacts with AUSF 625, UDM 626, and PCF 627 to authenticate and authorize UE 601 for wireless data service.

Responsive to the authentication and authorization, AMF 621 generates UE context to establish the wireless data service. For example, AMF 621 may retrieve Quality-of-Service (QoS) metrics, slice Identifiers (IDs), service attributes, and the like from UDM 626. AMF 621 interacts with NSSF 624 to select a network slice for UE 601. AMF 621 selects SMF 622 to serve UE 601 based on the slice ID, QoS metrics, and the service attributes. SMF 622 selects UPF 623 based on the service information provided by UDM 626 and the slice ID. SMF 622 indicates the network addresses for UPF 623 to AMF 621. AMF 621 generates UE context for UE 601 using the received information. The UE context comprises the QoS metrics, the slice ID, the network addresses, the service attributes, and the like. AMF 621 transfers the UE context to UE 601 over RAN 610.

In response to receiving a user input, UE 601 executes user applications, including an L4S application. For example, UE 601 may execute a live video upload application, an XR application, an MR application, a VR application, an AR application, or some other type of latency sensitive application. UE 601 transfers PDU session requests for the user applications and low latency applications to AMF 621 over RAN 610. AMF 621 receives the PDU session requests and forwards the requests to SMF 622. SMF 622 interfaces with UPF 623 and AS 631 to set up the requested L4S PDU sessions, including the low-latency PDU session for the L4S application. SMF 622 generates session context that comprises network addresses for UPF 623 and AS 631. SMF 622 transfers the session context to UE 601 over RAN 610. UE 601 transfers uplink user data to UPF 623 over RAN 610. UPF 623 transfers the uplink user data to AS 631. AS 631 generates and transfers downlink user data for the PDU sessions to UPF 623. UPF 623 transfers the downlink to UE 601 over RAN 610.

DU 612 monitors uplink data congestion in RAN 610 for transmissions from 5G UE 601. To monitor uplink congestion, DU 612 detects when uplink data queues form. Typically, this occurs when the number of required resource blocks to transmit the uplink data is less than the number of available resource blocks. For example, DU 612 may host a congestion detection network application. The congestion detection application performs ECN marking on uplink data packets. When the internal ECN counter of the congestion detection application exceeds a preconfigured threshold, the congestion detection application inserts a congestion indication marker into a downlink packet. RAN 610 transfers the marked downlink packet to notify UE 601. DU 612 may measure additional queue attributes like the amount of queued data, the current data rate, a delta between expected and current data rate, estimated delay time, latency, and/or other queue attributes.

UE 601 wirelessly receives the congestion indication from RAN 610. UE 601 modifies its uplink scheduling based on the congestion indication. UE 601 determines a scheduling priority for its active PDU sessions. UE 601 prioritizes latency sensitive PDU sessions over non-latency sensitive applications. For example, UE 601 may prioritize an L4S PDU session over a best effort QoS PDU session. UE 601 schedules additional uplink data based on the scheduling priority. In some examples, UE 601 may reduce the uplink data transmissions for the non-latency sensitive PDU sessions while maintaining the uplink data transmissions for the latency sensitive PDU sessions to reduce congestion in RAN 610. UE 601 transfers uplink user data to UPF 623 over RAN 610. UPF 623 transfers the uplink user data to AS 631. AS 631 generates and transfers downlink user data for the PDU sessions to UPF 623. UPF 623 transfers the downlink to UE 601 over RAN 610. By directly notifying the L4S capable UE 601 of the uplink congestion, UE 601 can modify its uplink data rate thereby alleviating RAN data congestion without having to report the RAN congestion to AS 631. Moreover, by reporting directly to UE 601, AS 631 is not required to comprise L4S capabilities.

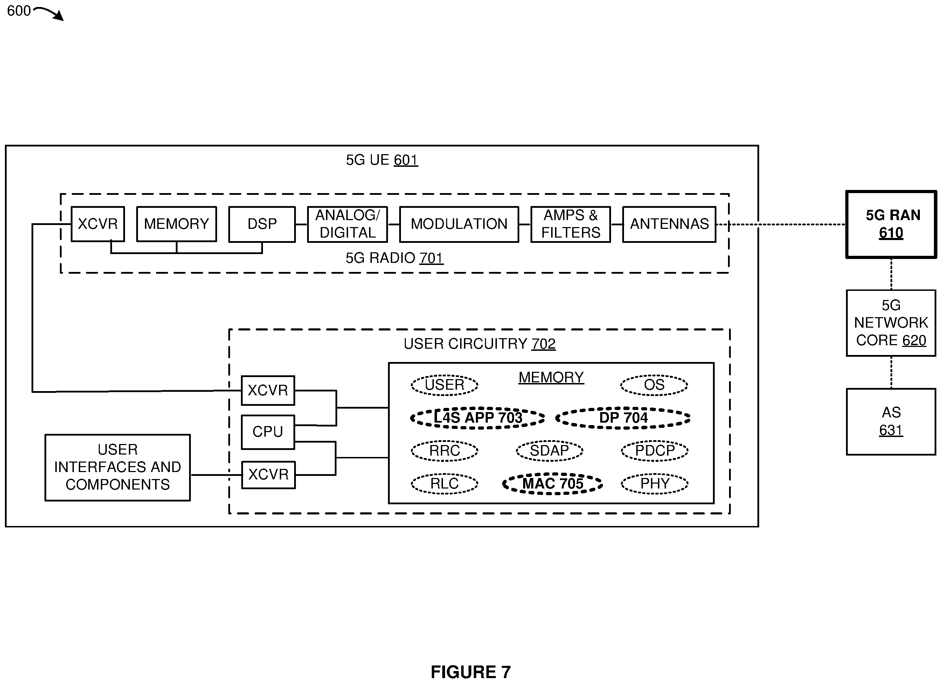

Figure 7 illustrates 5G UE 601 in 5G communication network 600. UE 601 comprises an example of user device 101 illustrated in Figure 1 and UE 301 illustrated in Figure 3, however user device 101 and UE 301 may differ.

UE 601 comprises 5G radio 701 and user circuitry 702. Radio 701 comprises antennas, amplifiers, filters, modulation, analog-to-digital interfaces, Digital Signal Processers (DSP), memory, and transceivers (XCVRs) that are coupled over bus circuitry. User circuitry 702 comprises memory, CPU, user interfaces and components, and transceivers that are coupled over bus circuitry. The memory in user circuitry 702 stores an operating system (OS), user applications (USER), and SGNR network applications for Physical Layer (PHY), Media Access Control (MAC) 705, Radio Link Control (RLC), Packet Data Convergence Protocol (PDCP), Service Data Adaptation Protocol (SDAP), Radio Resource Control (RRC), L4S Application (L4S APP) 703, and Data Priority (DP) 704. The antenna in radio 701 is wirelessly coupled to 5G RAN 610 over a SGNR link. A transceiver in radio 701 is coupled to a transceiver in user circuitry 702. A transceiver in user circuitry 702 is typically coupled to the user interfaces and components like displays, controllers, and memory.

In radio 701, the antennas receive wireless signals from 5G RAN 610 that transport downlink 5GNR signaling and data. The antennas transfer corresponding electrical signals through duplexers to the amplifiers. The amplifiers boost the received signals for filters which attenuate unwanted energy. Demodulators down-convert the amplified signals from their carrier frequency. The analog/digital interfaces convert the demodulated analog signals into digital signals for the DSPs. The DSPs transfer corresponding SGNR symbols to user circuitry 702 over the transceivers. In user circuitry 702, the CPU executes the network applications to process the SGNR symbols and recover the downlink SGNR signaling and data. The SGNR network applications receive new uplink signaling and data from the user applications. The network applications process the uplink user signaling and the downlink SGNR signaling to generate new downlink user signaling and new uplink 5GNR signaling. The network applications transfer the new downlink user signaling and data to the user applications. The SGNR network applications process the new uplink 5GNR signaling and user data to generate corresponding uplink SGNR symbols that carry the uplink SGNR signaling and data.

In radio 701, the DSP processes the uplink SGNR symbols to generate corresponding digital signals for the analog-to-digital interfaces. The analog-to-digital interfaces convert the digital uplink signals into analog uplink signals for modulation. Modulation up-converts the uplink analog signals to their carrier frequency. The amplifiers boost the modulated uplink signals for the filters which attenuate unwanted out-of-band energy. The filters transfer the filtered uplink signals through duplexers to the antennas. The electrical uplink signals drive the antennas to emit corresponding wireless SGNR signals to 5G RAN 610 that transport the uplink 5GNR signaling and data.

RRC functions comprise authentication, security, handover control, status reporting, QoS, network broadcasts and pages, and network selection. SDAP functions comprise QoS marking and flow control. PDCP functions comprise security ciphering, header compression and decompression, sequence numbering and re-sequencing, de-duplication. RLC functions comprise Automatic Repeat Request (ARQ), sequence numbering and resequencing, segmentation and resegmentation. MAC functions comprise buffer status, power control, channel quality, Hybrid ARQ (HARQ), user identification, random access, user scheduling, QoS. PHY functions comprise packet formation/deformation, windowing/de-windowing, guard-insertion/guard-deletion, parsing/de-parsing, control insertion/removal, interleaving/de-interleaving, Forward Error Correction (FEC) encoding/decoding, channel coding/decoding, channel estimation/equalization, and rate matching/de-matching, scrambling/descrambling, modulation mapping/de-mapping, layer mapping/de-mapping, precoding, Resource Element (RE) mapping/de-mapping, Fast Fourier Transforms (FFTs)/Inverse FFTs (IFFTs), and Discrete Fourier Transforms (DFTs)/Inverse DFTs (IDFTs). L4S APP 703 functions comprise queue indication detection and providing L4S application services like live video upload, XR services, MR service, VR services, and/or AR services. DP 704 functions comprise prioritizing data types for uplink transmission.

In some examples, UE 601 executes L4S APP 703 in response to user input to receive L4S services. For example, L4S APP 703 may comprise a live video streaming application and UE 601 may execute L4S APP 703 to upload a live video stream. L4S APP 703 receives downlink data for the L4S session. L4S APP 703 reads a message header in the downlink data packets and detects the uplink queue congestion indication transferred by DU 612. For example, DU 612 may insert a congestion indication bit in the message header of a downlink data packet. L4S APP 703 may read the message header to detect imminent uplink data congestion in RAN 610. When L4S APP 703 detects the congestion indication, L4S APP 703 notifies DP 704. DP 704 generates an uplink scheduling priority for uplink data transmission. DP 704 ranks each PDU session for UE 601 based on their uplink latency requirements. DP 704 ranks PDU sessions with greater latency requirements (e.g., a low-latency data session) higher than PDU sessions with lower latency requirements (e.g., a best effort data session, a non-Guaranteed Bit Rate (GBR) session, etc.). DP 704 indicates the scheduling priority to MAC 705. The user applications and L4S APP 703 generate uplink user data for their respective PDU sessions. MAC 705 schedules the uplink data for uplink transmission for the PDU sessions based on the scheduling priority generated by DP 704. For example, MAC 705 may schedule user data generated by L4S APP 703 for transmission before scheduling user data generated by other user applications. For example, MAC 705 may schedule the uplink data to maintain the bit rate and latency of the PDU session for L4S APP 703 and that reduces the bit rate for the other PDU sessions. UE 601 executes the other network applications like SDAP, PDCP, RLC, and PHY to transfer the uplink user data for the PDU sessions to RAN 610.

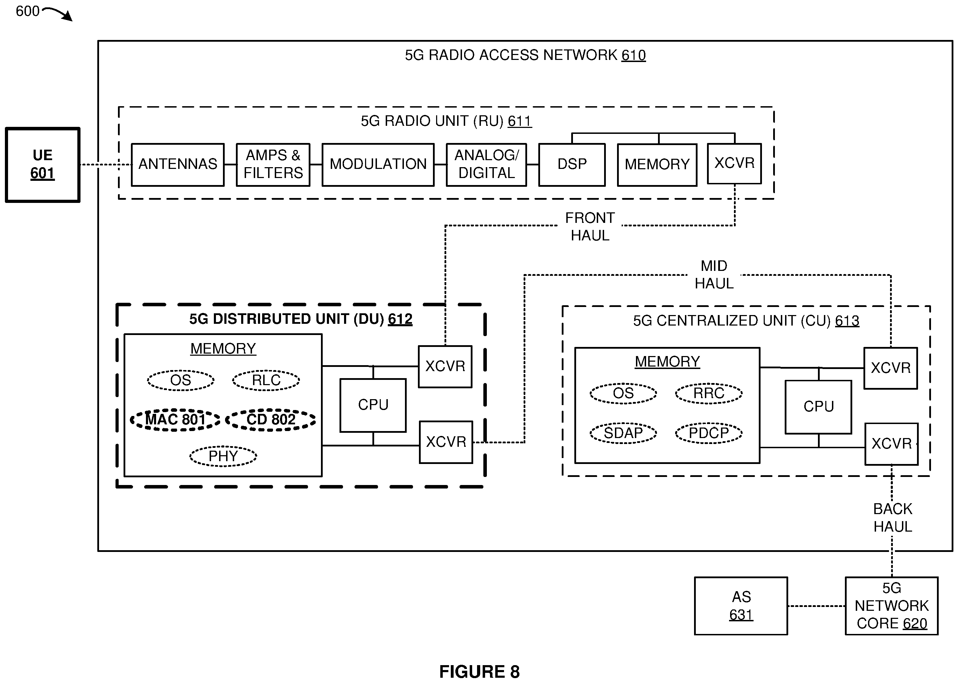

Figure 8 illustrates 5G RU 611, 5G DU 612, and 5G CU 613 in 5G communication network 600. RU 611, DU 612, and CU 613 comprise an example of access node 110 illustrated in Figure 1 and RAN 310 illustrated in Figure 3, however access node 110 and RAN 310 may differ.

RU 611 comprises antennas, amplifiers, filters, modulation, analog-to-digital interfaces, DSP, memory, and transceivers (XCVRs) that are coupled over bus circuitry. UE 601 is wirelessly coupled to the antennas in RU 611 over SGNR links. Transceivers in 5G RU 611 are coupled to transceivers in 5G DU 612 over fronthaul links like enhanced Common Public Radio Interface (eCPRI). The DSPs in RU 611 executes their operating systems and radio applications to exchange SGNR signals with UE 601 and to exchange 5GNR data with DU 612.

For the uplink, the antennas receive wireless signals from UE 601 that transport uplink SGNR signaling and data. The antennas transfer corresponding electrical signals through duplexers to the amplifiers. The amplifiers boost the received signals for filters which attenuate unwanted energy. Demodulators down-convert the amplified signals from their carrier frequencies. The analog/digital interfaces convert the demodulated analog signals into digital signals for the DSPs. The DSPs transfer corresponding SGNR symbols to DU 612 over the transceivers.

For the downlink, the DSPs receive downlink SGNR symbols from DU 612. The DSPs process the downlink SGNR symbols to generate corresponding digital signals for the analog-to-digital interfaces. The analog-to-digital interfaces convert the digital signals into analog signals for modulation. Modulation up-converts the analog signals to their carrier frequencies. The amplifiers boost the modulated signals for the filters which attenuate unwanted out-of-band energy. The filters transfer the filtered electrical signals through duplexers to the antennas. The filtered electrical signals drive the antennas to emit corresponding wireless signals to UE 601 that transport the downlink SGNR signaling and data.

DU 612 comprises memory, CPU, and transceivers that are coupled over bus circuitry. The memory in 5G DU 612 stores operating systems and 5GNR network applications like PHY, MAC 801, Congestion Detection (CD) 802 and RLC. CU 613 comprises memory, CPU, and transceivers that are coupled over bus circuitry. The memory in CU 613 stores an operating system and 5GNR network applications like PDCP, SDAP, and RRC. Transceivers in 5G DU 612 are coupled to transceivers in RU 611 over front-haul links. Transceivers in DU 612 are coupled to transceivers in CU 613 over mid-haul links. A transceiver in CU 613 is coupled to network core 620 over backhaul links.

RLC functions comprise ARQ, sequence numbering and resequencing, segmentation and resegmentation. MAC 801 functions comprise buffer status, power control, channel quality, HARQ, user identification, random access, user scheduling, QoS, and BNR generation. CD 802 functions include congestion detection and queue measuring. PHY functions comprise packet formation/deformation, guard-insertion/guard-deletion, parsing/de-parsing, control insertion/removal, interleaving/de-interleaving, FEC encoding/decoding, channel coding/decoding, channel estimation/equalization, and rate matching/de-matching, scrambling/descrambling, modulation mapping/de-mapping, layer mapping/de-mapping, precoding, RE mapping/de-mapping, FFTs/IFFTs, and DFTs/IDFTs. PDCP functions include security ciphering, header compression and decompression, sequence numbering and re-sequencing, de-duplication. SDAP functions include QoS marking and flow control. RRC functions include authentication, security, handover control, status reporting, QoS, network broadcasts and pages, and network selection.

In some examples, MAC 801 schedules downlink and uplink user data for PDU sessions, including an L4S data session for UE 601. The PHY exchanges uplink and downlink resource blocks based on the scheduling provided by MAC 801 with UE 601. The radio circuitry in RU 611 wirelessly transfers/receives the resource blocks to and from UE 601. MAC 801 indicates queuing delays and queue status for uplink data transmissions to CD 802. CD 802 monitors the severity of the queueing status for the uplink data transfer. CD 802 compares the amount of available downlink resource blocks to the amount of required downlink resource blocks for a given time interval. CD 802 determines a data queue exists or predicts a data queue will form when the amount of required resource blocks exceeds the amount of available resource blocks for the time interval. For example, CD 802 may comprise ECN functionality. CD 802 may maintain an ECN counter that tracks the amount of uplink congestion in RAN 610. When the ECN counter exceeds a threshold value, CD 802 determines an uplink data queuing event will impact the latency of the L4S PDU session of UE 601. When CD 802 detects uplink data queuing, CD 802 inserts a congestion indication bit into the message header of a downlink data packet(s) for the L4S PDU session. MAC 801 schedules the downlink data packet with the congestion indication for transfer to UE 601. The PHY in DU 612 transfers downlink resource blocks that include the packet with the congestion indication based on the scheduling provided by MAC 801. The radio circuitry in RU 611 wirelessly transfers the downlink resource blocks with the congestion indication to UE 601.

In some examples, MAC 801 and CD 802 generate a Bottleneck Report (BNR) that further characterizes the uplink congestion in RAN 610. After CD 802 detects the existence of the uplink queue, CD 802 measures queue attributes like queue size, latency, uplink data rate, estimated queue time, amount of queued L4S data for UE 601, and the like. CD 802 indicates the existence of the queue and the measured queue attributes to MAC 801. MAC 801 generates the BNR based on the queue measurements and schedules the BNR for wireless transmission to UE 601.

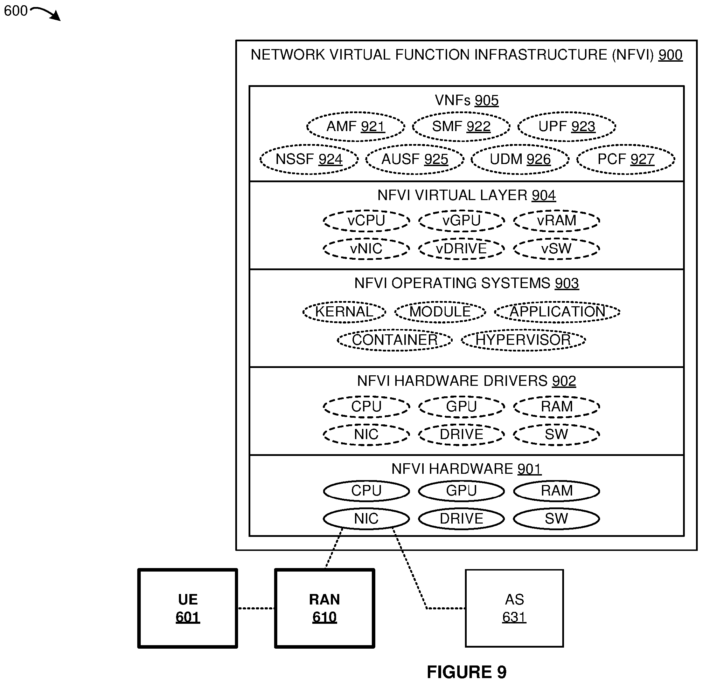

Figure 9 illustrates Network Function Virtualization Infrastructure (NFVI) 900. NFVI 900 comprises an example of core network 121 illustrated in Figure 1 and network circuitry 320 illustrated in Figure 3, although core network 121 and network circuitry 320 may differ. NFVI 900 comprises NFVI hardware 901, NFVI hardware drivers 902, NFVI operating systems 903, NFVI virtual layer 904, and NFVI VNFs 905. NFVI hardware 901 comprises Network Interface Cards (NICs), CPU, GPU, RAM, Flash/Disk Drives (DRIVE), and Data Switches (SW). NFVI hardware drivers 902 comprise software that is resident in the NIC, CPU, GPU, RAM, DRIVE, and SW. NFVI operating systems 903 comprise kernels, modules, applications, containers, hypervisors, and the like. NFVI virtual layer 904 comprises vNIC, vCPU, vGPU, vRAM, vDRIVE, and vSW. NFVI VNFs 905 comprise AMF 921, SMF 922, UPF 923, NSSF 924, AUSF 925, UDM 926, and PCF 927. Additional VNFs and network elements like Network Repository Function (NRF), Network Exposure Function (NEF), and Unified Data Repository (UDR) are typically present but are omitted for clarity. NFVI 900 may be located at a single site or be distributed across multiple geographic locations. The NIC in NFVI hardware 901 is coupled to RAN 610 and to AS 931. NFVI hardware 901 executes NFVI hardware drivers 902, NFVI operating systems 903, NFVI virtual layer 904, and NFVI VNFs 905 to form AMF 621, SMF 622, UPF 623, NSSF 624, AUSF 625, UDM 626, and PCF 627.

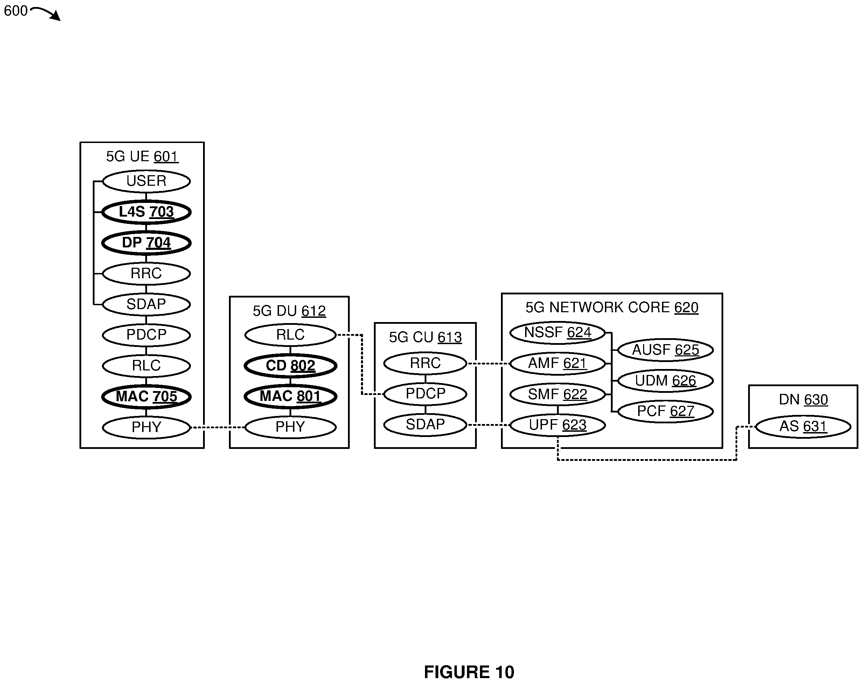

Figure 10 illustrates an exemplary operation of 5G communication network 600 to proactively notify a 5G UE in response to uplink data congestion. The operation may vary in other examples. In operation, UE 601 executes user applications and L4S APP 703. In response, UE 601 wirelessly attaches to CU 613 via DU 612 and RU 611. The RRC in UE 601 exchanges attachment signaling with the RRC in CU 613 over the PDCPs, RLCs, MACs, and PHYs to establish an RRC connection. The RRC in UE 601 transfers a registration request comprising a registration type, UE capabilities, requested slice types, non-GBR PDU session requests, and an L4S PDU session requests. The RRC in CU 613 transfers a registration request for UE 601 to AMF 621. AMF 621 responds to the registration request by transferring an identity request for UE 601 to the RRC in CU 613. The RRC in CU 613 forwards the identity request to the RRC in UE 601 over the PDCPs, RLCs, MACs, and PHYs. The RRC in UE 601 responds to the identity request by transferring an identity indication to the RRC in CU 613 over the PDCPs, RLCs, MACs, and PHYs. The RRC in CU 613 transfers the identity indication to AMF 621. AMF 621 interacts with AUSF 625, UDM 626, and PCF 627 to authenticate and authorize UE 601 for wireless data services.

Responsive to the authentication and authorization, AMF 621 retrieves QoS metrics, slice IDs, service attributes, and the like from UDM 626. AMF 621 interacts with NSSF 624 to select a network slice for UE 601. AMF 621 selects SMF 622 to serve UE 601 based on the slice ID, QoS metrics, the service attributes, and the requested PDU session types. SMF 622 selects UPF 623 based on the requested PDU session types and the slice ID. SMF 622 indicates the network addresses for UPF 623 and AS 631 to AMF 621. AMF 621 generates UE context for UE 601 using the received information to establish the requested PDU sessions. The UE context comprises the QoS metrics, the slice ID, the network addresses, and the service attributes. AMF 621 transfers the UE context to the RRC in CU 613. The RRC in CU 613 transfers the UE context to the RRC in UE 601 over the PDCPs, RLCs, MACs, and PHYs.

The RRC in UE 601 receives the UE context and controls the SDAP in UE 601 to begin the non-GBR PDU sessions and the L4S PDU session. The RRC indicates the network addresses for UPF 623 and AS 631 to the SDAP. The RRC directs the user applications and L4S APP 703 to begin their respective PDU sessions. The user applications generate uplink user data for their non-GBR PDU sessions. L4S APP 703 generates uplink user data for the L4S PDU session. The SDAP transfers the uplink user data for the non-GBR PDU sessions and the L4S PDU session to the SDAP in CU 613 over the PDCPs, RLCs, MACs, and PHYs. The SDAP in CU 613 transfers the uplink user data to UPF 623 and UPF 623 transfers the uplink user data to AS 631. AS 631 generates downlink user data for the non-GBR PDU sessions and the L4S PDU session. AS 631 transfers the downlink user data to UPF 623. UPF 623 transfers the downlink to the SDAP in CU 613. The SDAP in CU 613 transfers the downlink user data to the SDAP in UE 601 over the PDCPs, RLCs, MACs, and PHYs.

MAC 801 monitors data congestion in RAN 610 for uplink transmissions from 5G UE 601. MAC 801 indicates queue attributes to CD 802. For example, MAC 801 may indicate the amount of available uplink air resources and the amount of needed air resources to CD 802. CD 802 maintains an internal ECN counter to predict uplink queue formation. Generally, as the ECN counter increases, the likelihood of an uplink data queue forming also increases. CD 802 increases the ECN counter in response to queueing events. For example, CD 802 may increase the ECN counter when the amount of needed air resources exceeds the amount of available air resources. When the ECN counter exceeds a threshold, CD 802 inserts a queue indication into a message header of a downlink data packet of the L4S PDU session. The SDAP in CU 613 transfers the downlink data that includes the congestion indication to the SDAP in UE 601.

The SDAP in UE 601 indicates the marked downlink packet to L4S APP 703. L4S APP 703 reads the packet headers of the downlink data and detects the congestion indication. L4S APP 703 notifies DP 704 of the congestion indication. DP 704 determines priority scheduling for uplink data transfer. DP 704 prioritizes uplink data for the L4S PDU session over uplink data for the non-GBR PDU sessions. DP 704 transfers the scheduling priority to MAC 705. Although DP 704 is illustrated as a separate network application, in some examples, MAC 703 may perform the operations of DP 704 or DP 704 may exist as a subcomponent of MAC 703. MAC 705 schedules additional uplink data transmissions based on the scheduling priority. The SDAP in UE 601 transfers additional uplink user data for the non-GBR PDU sessions and the L4S PDU sessions to the SDAP in CU 613 based on the MAC scheduling over the PDCPs, RLCs, MACs, and PHYs. The SDAP in CU 613 transfers the user data for the PDU sessions to UPF 623. UPF 623 transfers the uplink user data for the PDU sessions to AS 631. AS 631 generates and transfers additional downlink user data for the non-GBR PDU sessions and L4S PDU session to UPF 623. UPF 623 transfers the additional downlink user data to the SDAP in CU 613. The SDAP in CU 613 transfers the additional downlink user data to the SDAP in UE 601 over the PDCPs, RLCs, MACs, and PHYs.

The wireless data network circuitry described above comprises computer hardware and software that form special-purpose network circuitry to proactively notify user devices in response to uplink data congestion. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose network circuitry to proactively notify user devices in response to uplink data congestion.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method of operating a wireless communication network to proactively notify user devices in response to uplink data congestion, the method comprising:
an access node wirelessly exchanging user data with a wireless user device;
the access node exchanging the user data with a network user plane;
the access node detecting a data queue for uplink user data transferred by the wireless user device;
the access node indicating the data queue to the wireless user device;
the wireless user device receiving the indication and scheduling additional uplink data transmissions based on a data priority;
the access node wirelessly exchanging additional user data with the wireless user device; and
the access node exchanging the additional user data with the network user plane.

2. The method of claim 1 wherein:
a first portion of the data packets comprise latency sensitive data packets;
a second portion of the data packets comprise other data packets; and
the wireless user device scheduling the additional uplink data transmissions based on the data priority comprises prioritizing the latency sensitive packets over the other data packets.

3. The method of claim 1 wherein:
a first portion of the data packets comprise Low-Latency, Low Loss Scalable Throughput, L4S, data packets;
a second portion of the data packets comprise other data packets; and
the wireless user device scheduling the additional uplink data transmissions based on the data priority comprises prioritizing the L4S packets over the other data packets.

4. The method of claim 1 wherein:
the access node detecting the data queue for uplink user data transferred by the wireless user device comprises detecting the presence of the data queue, determining an uplink data latency, determining an uplink data rate, and determining an amount of queued uplink data.

5. The method of claim 4 wherein:
the access node indicating the data queue to the wireless user device comprises generating and transferring a queue report that indicates the presence of an uplink data queue, the uplink data latency, the uplink data rate, and the amount of queued uplink data.

6. The method of claim 1 further comprising:
the access node tracking an Explicit Congestion Notification, ECN, counter and determining when the ECN counter exceeds a threshold value; and
when the ECN counter exceeds the threshold value, the access node inserting a queue indicator into a message header of a downlink data packet; and wherein:
the access node indicating the data queue to the wireless user device comprises transferring the downlink data packet that comprises the queue indicator to the wireless user device.

7. The method of claim 1 further comprising:
the access node executing a Media Access Control, MAC, network application;
the access node executing a Congestion Detection, CD, network application; and
wherein:
the access node detecting the data queue for the uplink user data transferred by the wireless user device comprises the MAC detecting the data queue for the uplink user data transferred by the wireless user device; and
the access node indicating the data queue to the wireless user device comprises the CD indicating the data queue to the wireless user device.

8. A wireless communication network configured to proactively notify user devices in response to uplink data congestion, the wireless communication network comprising:
an access node configured to:
wirelessly exchange user data with a wireless user device;
exchange the user data with a network user plane;
detect a data queue for uplink user data transferred by the wireless user device and indicate the data queue to the wireless user device; and
the wireless user device configured to:
receive the indication and schedule additional uplink data transmissions based on a data priority; and
the access node configured to:
wirelessly exchange additional user data with the wireless user device; and
exchange the additional user data with the network user plane.

9. The wireless communication network of claim 8 wherein:
a first portion of the data packets comprise latency sensitive data packets;
a second portion of the data packets comprise other data packets; and
the wireless user device is configured to prioritize the latency sensitive packets over the other data packets.

10. The wireless communication network of claim 9 wherein:
a first portion of the data packets comprise Low-Latency, Low Loss Scalable Throughput, L4S, data packets;
a second portion of the data packets comprise other data packets; and
the wireless user device is configured to prioritize the L4S packets over the other data packets.

11. The wireless communication network of claim 8 wherein:
the access node is configured to detect the presence of the data queue, determine an uplink data latency, determine an uplink data rate, and determine an amount of queued uplink data.

12. The wireless communication network of claim 11 wherein:
the access node is configured to generate and transfer a queue report that indicates the presence of an uplink data queue, the uplink data latency, the uplink data rate, and the amount of queued uplink data.

13. The wireless communication network of claim 11 further comprising:
the access node configured to track an Explicit Congestion Notification, ECN, counter and determine when the ECN counter exceeds a threshold value; and
when the ECN counter exceeds the threshold value, the access node configured to insert a queue indicator into a message header of a downlink data packet; and wherein:
the access node is configured to transfer the downlink data packet that comprises the queue indicator to the wireless user device.

14. The wireless communication network of claim 8 further comprising:
the access node configured to execute a Media Access Control, MAC, network application;
the access node configured to execute a Congestion Detection, CD, network application; and wherein:
the MAC is configured to detect the data queue for the uplink user data transferred by the wireless user device; and
the CD is configured to indicate the data queue to the wireless user device.

15. The wireless communication network of claim 8 wherein:
the access node comprises a Fifth Generation New Radio, SGNR, radio unit, a SGNR distributed unit, and a SGNR centralized unit; and
the wireless user device comprises a Low-Latency, Low Loss Scalable Throughput, L4S, capable user device.
